# FASCICULE DE BREVET EUROPEEN

(11) **EP 2 493 672 B1**
(45) Date de publication et mention de la délivrance du brevet: **12.07.2017**
(21) Numéro de dépôt: 10792958.0
(22) Date de dépôt: 02.11.2010
(51) Int. Cl.: B29C 45/00, B29C 45/18, C08K 3/00, C08K 5/00, C08J 3/22, C08L 67/02, A47J 43/28, A47J 45/06

(54) **ARTICLE CULINAIRE DE POLYMÈRE THERMOPLASTIQUE À BASE DE PET ET PROCÉDÉ DE FABRICATION D'UN TEL ARTICLE**
KOCHARTIKEL AUS THERMOPLASTISCHEM POLYMER AUF PET BASIS UND HERSTELLUNGSPROZESS DIESES ARTIKELS
THERMOPLASTIC POLYMER COOKING ARTICLE BASED ON PET AND PROCESS FOR MAKING SUCH ARTICLE

(30) Priorité: 30.10.2009 FR 0957675
(43) Date de publication de la demande: 05.09.2012
(73) Titulaire: SEB S.A., 69130 Ecully (FR)
(72) Inventeur: CUILLERY, Pascal, F-74210 Faverges (FR); DEMOLIS, Michel, F-01200 Lancrans (FR); GENTHON, Eric, F-38690 Le Grand Lemps (FR)
(74) Mandataire: Novagraaf Technologies
(86) Numéro de dépôt international: PCT/FR2010/052345
(87) Numéro de publication internationale: WO 2011/051640

(56) Documents cités:
- DE-A1- 19 642 288
- US-A- 5 039 717
- US-A1- 2009 220 715
- US-B1- 6 469 083
- US-B2- 6 689 454
- US-B2- 7 182 997

## Description

La présente demande concerne un matériau polymère thermoplastique à base de polyéthylène téréphtalate (PET), qui se présente sous forme d'un article moulé par injection. La présente invention concerne également un procédé de fabrication d'un tel article.

Les articles, notamment de type culinaire, sont le plus souvent composés d'un matériau à base de polyamide (PA), qui présente plusieurs avantages, et en particulier celui de pouvoir être moulé par injection. Toutefois, le polyamide (PA) présente l'inconvénient d'une part de jaunir par oxydation thermique lorsqu'il est soumis à une température de plus de 200°C (conditions de friture), et d'autre part de se tacher au lave-vaisselle, qui impose une montée en température à 70°C, soit 30°C au-dessus de la température de transition vitreuse du PA. En effet, à 30° au dessus de sa température de transition vitreuse, un polymère comporte généralement un volume libre suffisant pour être sensible à la diffusion de pigment. C'est pour cette raison que le PA est sensible à la présence d'aliments colorants au lave vaisselle (par exemple de type carotte, tomate ou myrtille).

La spatule étant un article culinaire destiné à être en contact direct avec les aliments, tout problème de jaunissement ou de tachage est rédhibitoire, car il est perçu par le consommateur comme un défaut d'hygiène. Cela conduit le fabricant d'articles culinaires en polyamide (PA) à ne développer que des gammes ayant une couleur foncée, pour s'affranchir de ces problèmes de tachage.

Il est donc souhaitable de remplacer le polyamide par un matériau moins coûteux et qui ne se tache pas et jaunit pas.

A titre de matériau de remplacement, on connaît le polyéthylène téréphtalate (PET) qui est un polymère thermoplastique, beaucoup moins coûteux que le polyamide avec une tenue thermique équivalente au polyamide (point de fusion à 255°C). En outre, la température de transition vitreuse du PET (80°C) explique son excellente tenue au tachage lors d'utilisations au lave-vaisselle. De plus, sa stabilité thermique est meilleure que celle du PA, ce qui limite son jaunissement lors de sollicitation en température. L'utilisation de coloris clairs est donc possible.

La fabrication des spatules passe nécessairement par le moulage par injection, qui seul permet l'obtention de formes d'épaisseur variable.

Pour le moulage par injection d'un matériau thermoplastique tel que le PET, on utilise typiquement du PET sous forme de granulés prêts à l'injection, c'est-à-dire des granulés compoundés (disponibles dans le commerce sous cette forme). Ces granulés sont typiquement constitués de résine PET d'une part, et d'additifs nécessaires pour l'injection notamment du type démoulant, nucléant d'autre part. Le compoundage du PET (qui est un procédé de mélange par fusion de matières plastiques et d'additifs) induit un passage à l'état fondu du PET, qui impose une dessiccation poussée afin d'atteindre une teneur en eau résiduelle inférieure à 0,02% et d'éviter une hydrolyse du polymère à l'état fondu. Cette hydrolyse a pour effet un abaissement de la masse moléculaire, ce qui nuit aux propriétés mécaniques du produit. Un cycle de dessiccation de 6 heures à 160°C est donc généralement requis avant le compoundage du PET : cela explique le coût plus élevé des compounds de PET par rapport aux compounds de PA, alors que la résine PET est plus économique que la résine PA !

Dans ce domaine, on connaît le brevet français FR 2552095, qui décrit une composition de moulage comprenant du PET, un agent de nucléation (par exemple un benzoate), un polycaprolactone à poids moléculaire élevé et un triglycéride insaturé époxydé, et des charges telles que des fibres de verre, dont la présence fait implicitement référence à une opération de compoundage. Cette référence est également explicite puisque FR 2552095 enseigne que le mélange des composants s'effectue sur l'extrudeuse, ce qui est la définition même du compoundage.

La demande de brevet allemand DE19642288 décrit une plaque constituée essentiellement d'un matériau thermoplastique (notamment du PET) cristallisable, d'un agent de nucléation et d'au moins un colorant. L'épaisseur de cette plaque varie entre 1 et 20 mm, et l'agent de nucléation est présent dans le matériau à raison de 0,01 à 3% en poids.

Pour pallier tout ou partie des inconvénients précités, la demanderesse a maintenant mis au point un procédé de moulage par injection d'une composition polymère thermoplastique qui permet de se passer de l'utilisation de compounds de PET. Ce procédé met en oeuvre, comme produits de départ, d'une part une simple résine de PET non compoundée, rendue sèche avec un dessiccateur du type de ceux habituellement utilisés par les transformateurs, et d'autre part un mélange maître comprenant des pigments et au moins un agent de nucléation (ainsi qu'optionnellement des additifs nécessaires à la réussite de l'injection : démoulant, cristallisant, stabilisant thermique, charges organiques et minérales), avantageusement dispersés dans du polybutylène téréphtalate(PBT). Avec de tels matériaux de départ, la demanderesse a mis au point un procédé qui permet de mouler par injection des articles en PET.

Plus particulièrement, la présente invention a pour objet un procédé de fabrication d'un article culinaire par moulage par injection dans une presse à injecter, comprenant les étapes suivantes :
a) introduction dans une trémie d'alimentation d'une composition polymère thermoplastique comprenant du polyéthylène téréphtalate, et introduction dans un réservoir d'un mélange maître d'au moins un pigment ;
b) injection simultanée de la composition polymère thermoplastique et du mélange maître dans un cylindre d'injection communiquant avec ladite trémie et ledit réservoir via un doseur ;
c) plastification de la composition polymère thermoplastique et du mélange maître pour former, dans le cylindre d'injection, une matière plastique fondue-;
d) transfert de la matière plastique fondue dans un moule ; et
e) mise sous pression du moule pour former l'article moulé ; puis
f) mise à une température contrôlée du moule pour rigidifier l'article moulé et l'éjecter ;
ledit procédé étant caractérisé en ce que la composition polymère thermoplastique introduite initialement dans la trémie comprend au plus 5% en poids de charges minérales par rapport au poids total de l'article et se présente sous forme d'une résine non compoundée avec une teneur en eau résiduelle d'au plus de 0,02% par rapport au poids total de ladite composition,
le taux de charges minérales dans ledit article culinaire étant d'au plus 5%,
et en ce que le seul mélange maître contient en outre le ou les pigments, au moins un agent de nucléation.

Par mélange maître, on entend, au sens de la présente invention une dispersion, à concentration élevée, d'additifs et de pigments dans une substance macromoléculaire compatible avec la matière plastique à colorer, le taux d'additif et de pigments ne dépassant généralement pas 70% en poids du mélange maître.

La présence de l'agent de nucléation favorise la cristallisation du polymère de la composition polymère.

Comme exemples d'agents de nucléation, on peut notamment citer les agents de nucléation inorganiques tels que le talc et la silice, les agents de nucléation organiques tels que les acides carboxyliques de haut poids moléculaire, ou les sels de métaux alcalins tel que le benzoate de sodium. On citera aussi les résines ionomères. On utilise de préférence, dans le cadre de la présente invention, le benzoate de sodium.

Selon un mode de réalisation avantageux du procédé de l'invention, le mélange maître comporte en outre une résine thermoplastique pour disperser les additifs et les pigments du mélange maître. Cette résine thermoplastique est une deuxième résine thermoplastique différente du PET.

De manière avantageuse, cette deuxième résine est une résine polyester. Mais il également possible d'utiliser des résines polycarbonate ou polyamide.

De préférence, il s'agit de polybutylène téréphtalate (PBT), qui représente avantageusement 5% en poids du poids total de l'article.

Le PBT a une structure chimique voisine de celle du PET, qui le rend compatible dans le PET. De plus, son point de fusion relativement élevé (autour de 220°C) n'affecte pas le point de fusion global de la matrice (autour de 250°C).

Les résines thermoplastiques autres que les résines polyester (notamment les résines polycarbonate et polyamide), les résines polyesters autres que le PET et PBT sont utilisables dans le cadre de cette invention à condition que leur point de fusion, ou à défaut leur température de transition vitreuse, soit préférentiellement au dessus de 130°C. En effet, la pièce se solidifie dans un moule dont la température de régulation est de 140°C. Si la pièce n'est pas complètement rigidifiée à cette température, elle s'éjectera plus difficilement. Par exemple l'utilisation du polyéthylène comme dispersant conduit à des pièces qui collent au moule ou qui se déforment pendant l'éjection car elles ne sont pas suffisamment rigides à cette température : problème de démoulage.

De manière avantageuse, lorsqu'on utilise à titre de dispersant du PBT, celui-ci représente 1 à 10% en poids du poids total du matériau. En effet, la demanderesse a remarqué qu'une telle quantité de PBT permet d'améliorer encore davantage la dispersion des additifs et/ou des pigments dans la matrice. Au-dessus d'une teneur de 10% de PBT, c'est économiquement inintéressant, car le PBT compoundé avec ses additifs et ses pigments est alors plus cher que le PET, tandis qu'au-dessous de 1% de PBT, la quantité de PBT est alors insuffisante pour avoir un quelconque effet.

Par charges minérales, on entend au sens de la présente invention toute substance inerte d'origine minérale, ajoutée à au matériau thermoplastique, permet d'en modifier de manière sensible les propriétés mécaniques, électriques ou thermiques, ou encore d'améliorer l'aspect de surface.

Parmi les charges minérales classiquement utilisées pour renforcer un polymère et qui sont, dans le cadre de la présente invention limité à 5% en poids par rapport au poids total de l'article, on distingue en général, pour les compounds de grande diffusion les charges minérales telles que la wollastonite et les fibres de verre, de carbone, le talc, les billes (pleines ou creuses), l'argile, et le CaCO₃.

De préférence, la composition polymère thermoplastique est constituée de granulés de PET non compoundés et est exempte de charges, de pigments et d'additif avec un taux d'humidité inférieur à 0,02%.

De manière avantageuse, la composition thermoplastique polymère peut comporter, outre l'agent de nucléation, d'autres additifs destinés au moulage par injection.

A titre d'additifs utilisables selon l'invention (autres que les agents du nucléation), on peut notamment citer les stabilisants thermiques, les agents de démoulage, les lubrifiants et les charges minérales ou organiques.

Comme exemples de stabilisants thermiques, on peut notamment citer les antioxydants primaires de la famille des phénols encombrés et des amines aromatiques secondaires, les antioxydants secondaires (thioéthers, thioesters, ainsi que les phosphites).

Comme exemples d'agents de démoulage, on peut notamment citer les silicones, et en particulier les huiles de silicones.

Comme exemples de lubrifiants, on peut notamment citer les stéarates comme le stéarate de calcium ou les cires de paraffine, de polyéthylène (modifiées ou non), d'ester et de l'acide montanique.

Comme exemples de charges, on peut notamment citer les charges organiques comme la poudre de PTFE, de PPS, de PA ou les charges minérales type talc, carbonate de calcium, wollastonite, sulfate de baryum, kaolin, graphite, mica, silice et silicates.

A titre de pigments minéraux ou organiques (solubles ou insolubles) utilisables dans le matériau thermoplastique selon l'invention, on peut notamment citer le dioxyde de titane, les oxydes, hydroxydes et sulfures d'ions métalliques, les molécules à groupement azoique, la famille des phtalocyanines et antraquinone et aussi le noir de carbone.

La présente invention a encore pour objet un article culinaire susceptible d'être obtenu par le procédé de fabrication selon l'invention tel que défini précédemment.

De préférence, ledit article culinaire est une spatule, présentant une épaisseur non constante variant entre 0,2 mm et 10 mm, avec au moins deux zones adjacentes présentant une différence d'épaisseur d'au moins 10%.

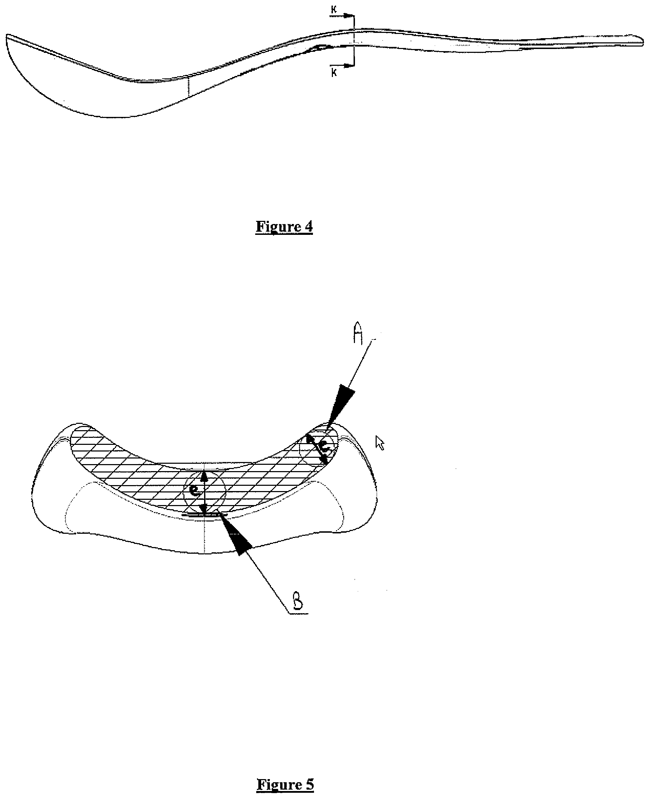

Une telle spatule selon l'invention est par exemple une spatule telle que celle représentée sur les figures 4 et 5.

D'autres avantages et particularités de la présente invention résulteront de la description qui va suivre, donnée à titre d'exemple non limitatif et faite en référence annexées :
- la figure 1 représente une vue schématique en coupe d'une presse à injecter typiquement utilisée pour le moulage par injection,
- la figure 2 représente la presse à injecter représentée sur la figure 1, cette presse étant mise en oeuvre dans le cadre du moulage par injection d'un compound de PET conformément à l'art antérieur,
- la figure 3 représente la presse à injecter représentée sur les figures 1 et 2, cette presse étant mise en oeuvre dans le cadre du moulage par injection d'une résine de PET conformément au procédé selon l'invention,
- la figure 4 représente une vue schématique en coupe longitudinale d'un exemple d'article moulé par injection selon l'invention, et
- la figure 5 représente une vue schématique en coupe transversale selon K-K de l'article représenté sur la figure 4.

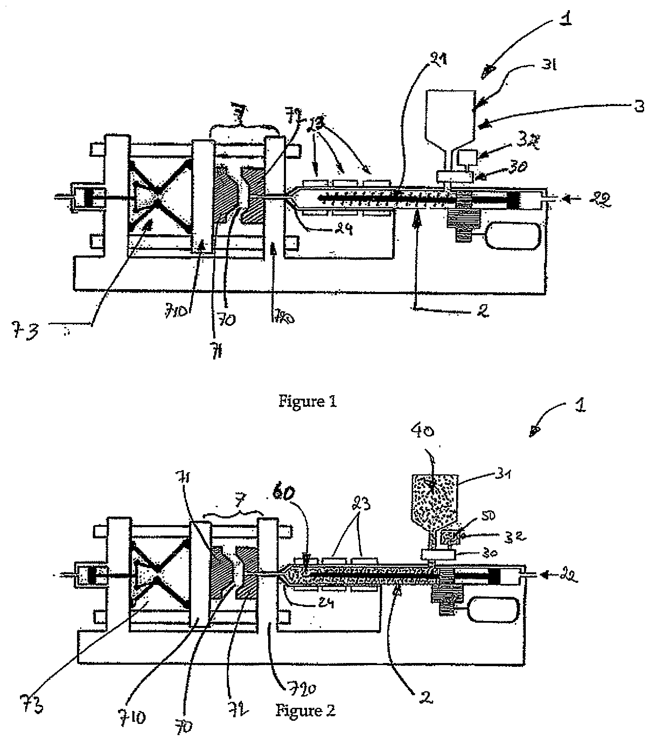

Les éléments identiques représentés sur les figures 1 à 3 sont identifiés par des références numériques identiques.

Sur les figures 1 à 3, on a représenté une presse à injecter 1 typiquement utilisée pour le moulage par injection d'articles en matériau polymère thermoplastique, en particulier à base de PET. La presse à injecter 1 comporte :
∘ un cylindre d'injection 2 dans lequel se déplace une vis d'injection 21, dont le mouvement est contrôlé par un vérin d'injection 22,
∘ une résistance chauffante 23 entourant le cylindre d'injection 22,
∘ un dispositif d'alimentation 3, avec doseur 30 communiquant avec ledit cylindre d'injection 2, ledit dispositif d'alimentation 3 comportant d'une part une trémie d'alimentation 31 pour recevoir une composition polymère thermoplastique 40, 41, et d'autre part un réservoir 32 pour recevoir un mélange maître 50, 51 d'au moins un pigment,
∘ un moule 7 comportant deux parties 71, 72 en vis à vis qui définissent au moins une empreinte 70, l'une des parties du moule 72 étant fixé à un plateau 720 quasiment fixe et l'autre partie 71 dudit moule 7 étant fixé à un plateau mobile 710, qui est commandé par un piston hydraulique 73 à attaque directe ou indirecte par genouillères ou par une commande mécanique, et
∘ au moins une buse d'injection 24 disposée à l'extrémité dudit cylindre 2 d'injection pour le mettre en communication avec l'empreinte du moule 70.

La figure 2 illustre la disposition des différents matériaux de départ 40, 50 utilisés pour la fabrication d'un article par moulage dans une presse à injecter selon un procédé de l'art antérieur. Une composition thermoplastique 40 constituée de granulés de PET prêts à être injectés (compound composé de résine de PET et d'additifs nécessaires à la réussite de l'injection) est introduite dans la trémie d'alimentation 31, et un mélange maître de pigments 50 est introduit dans le réservoir 32 du dispositif d'alimentation 3 de la presse 1.

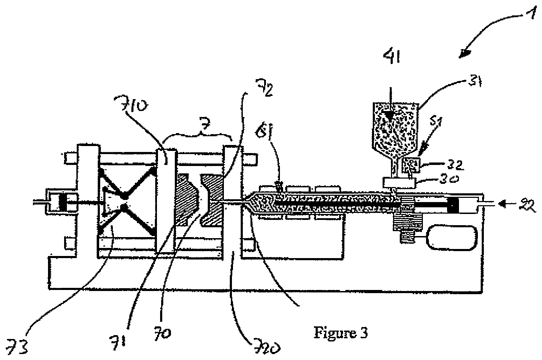

La figure 3 illustre la disposition des différents matériaux de départ 41, 51 utilisés pour la fabrication d'un article par moulage dans une presse à injecter selon le procédé de l'invention. Une composition thermoplastique 41 constituée de granulés de PET non compoundés (exempte de charges, de pigments et d'additif avec un taux d'humidité inférieur à 0,02%) est introduite dans la trémie d'alimentation 31, et un mélange maître 51 de pigments et d'additifs nécessaires à la réussite de l'injection est introduit dans le réservoir 32.

On va maintenant détailler les différentes étapes du procédé qui suivent l'introduction des matériaux de départ dans la trémie 31. Ces étapes sont identiques pour le procédé selon l'invention dont l'étape d'alimentation est illustrée sur la figure 3 et le procédé selon l'art antérieur dont l'étape d'alimentation est illustré sur la figure 2.

Après l'étape d'alimentation en matériaux de départ dans le dispositif d'alimentation 3, ceux-ci sont injectés simultanément, via le doseur dans le cylindre d'injection 2.

Le mélange de ces composés peut se faire à sec dans le doseur de la composition polymère thermoplastique et du mélange maître dans le cylindre : il s'agit dans ce cas d'un doseur mélangeur.

Le mélange peut aussi se faire dans le cylindre (à l'état fondu).

Une autre manière de procéder peut aussi consister à réaliser un « *dry blend* » : il s'agit de mélanger les granulés de mélange maitre et de résine non compoundé, puis d'introduire ce mélange de granulé dans le dessicateur et de faire passer ce mélange dans la trémie afin de l'injecter. Ceci permet de se passer du doseur mais reste une technique moins précise, nécessitant davantage de manipulation.

Puis, cette étape d'injection des matériaux de départ dans le cylindre 2 est suivie d'une phase de plastification par fusion de la composition polymère thermoplastique et du mélange maître pour obtenir une matière plastique fondue 60, 61. Cette fusion est réalisée sous l'action conjuguée de la chaleur produite par la résistance chauffante 23 entourant le cylindre 2, et d'autre part par la chaleur produite par la friction des granulés durant leur mouvement vers l'avant du cylindre 2.

La matière plastique fondue 60, 61 ainsi obtenue est alors transférée de l'avant du cylindre 2 via la buse d'injection 23 vers l'empreinte 70 du moule 7, .en appliquant une pression sur la vis d'injection 21 : le vérin d'injection 22 pousse la vis 21 vers l'avant.

Une fois que l'empreinte 70 du moule est remplie de la matière plastique fondue 60, 61, l'empreinte 70 est mise sous pression en exerçant une pression sur le plateau mobile 710, qui est commandé par un piston hydraulique 73 à attaque directe ou indirecte par genouillères ou par une commande mécanique. On forme alors l'article moulé, qui se rigidifie en se refroidissant et qui peut ensuite être éjecté.

Les figures 4 et 5 représentent un exemple d'article moulé par injection selon l'invention, en l'occurrence une spatule.

La figure 4 montre l'évolution du profil de la spatule selon la direction la direction d'allongement, tandis que la figure 5 représente l'évolution du profil de la spatule transversalement à la direction d'allongement, dans le sens de l'épaisseur e, avec, à l'endroit de la section K-K (indiquée sur la figure 4), deux zones adjacentes A et B, ou en continuum, où l'épaisseur e évolue : elle correspond au diamètre inscrit dans les zones A et B, et varie de 3,22 mm (zone B) à 3,76 mm (zone A), ce qui correspond à une variation d'épaisseur d'environ 16,8%.

### EXEMPLES

### Produits

### Compositions polymères thermoplastiques :

- Résine de PET 41, qui peut être soit la résine commercialisée sous la dénomination commerciale Réséko™ par la société Tergal Industrie, soit la résine commercialisée sous la dénomination commerciale T74F9 également par la société Tergal Industrie :
   - présentant une viscosité intrinsèque de 0,74 pour les deux résines, et
   - ayant été préalablement soumis à un traitement de dessiccation préalable réalisé de manière classique avec un dessiccateur habituellement utilisé par les transformateurs pour obtenir une résine avec une teneur en eau résiduelle inférieure à 0,02%.
- granulés de PET compoundés 41 prêts à l'injection), commercialisés par la société Dupont sous la dénomination commerciale de Rynite® 520.

### Mélanges maîtres :

- Mélange maître 51 commercialisé par la société ELIAN, ce mélange comporte (pourcentage donné par rapport au poids total de la pièce) :
   - 2,94% de PBT (polybutylène téréphtalate), qui ne nécessite pas de dessiccation particulière : un cycle d'étuvage classique de 2 heures à 80°C suffit,
      - des additifs se répartissant comme suit :
         - 0,72% d'huile de silicone à titre de démoulant,
         - 0,6% de benzoate de sodium à titre de nucléant,
         - 0,24% d'un phénol encombré (Irgarnox 145 vendu par la société CIBA, teneur 0,12%) et un phosphite (Irganox 168, CIBA, teneur 0,12 à titre de stabilisant thermique
         - 0,6% poudre de PTFE à titre de charge organique
         - 0,9% de pigments (notamment des oxydes de fer
- **Mélange maître 50.**
   ▪ 2% PBT
   ▪ 0,9% pigment

### Test

Le taux de charges minérales est évalué par la mesure du taux de cendres résiduelles après une calcination d'une heure à 700°C.

### EXEMPLES

### Exemple 1 (selon l'invention)

La résine de PET 41 est préalablement soumise à un traitement de dessiccation dans un dessiccateur traditionnellement utilisé par les transformateurs.

Puis on l'introduit, conformément au schéma de fonctionnement illustré sur la figure 3, dans la trémie d'alimentation 31 d'une presse à injecter 1 qui comporte un moule avec quatre empreintes 70 de spatule, dont la température est régulée à 140°C.

Par ailleurs, on introduit dans le réservoir 32 le mélange maître 51.

La résine 41 et le mélange maître 51 sont ensuite injectés simultanément dans le cylindre 2 via le doseur 30.

La température à l'entrée de la presse 1 est de 250°C, pour pouvoir fondre la composition polymère 41 et le mélange maître 51.

On obtient une matière plastique fondue, qui est transférée par 4 busettes d'injection 23 dont la température est régulée à 280°C, vers le moule 70 avec une pression d'injection de 30 bars. La pression de fermeture du moule est de 260 tonnes et le temps de séjour dans le moule 70 de la matière plastique fondue est de 5 seulement.

Les spatules ainsi obtenues présentent un taux de cendres résiduelles inférieur à 5%.

### Exemple 2 (comparatif)

On prépare, de la même manière que précédemment, des spatules à partir des granulés de PET 40 et du mélange maître 50.

Les conditions opératoires sont identiques à l'exemple 1.

Les spatules ainsi obtenues présentent un taux de cendres résiduelles de l'ordre de 20%.

## Revendications

1. Procédé de fabrication d'un article culinaire par moulage par injection dans une presse à injecter (1), ledit procédé comprenant les étapes suivantes :
a) introduction dans une trémie d'alimentation (31) d'une composition polymère thermoplastique (40, 41) comprenant du polyéthylène téréphtalate, et introduction dans un réservoir (32) d'un mélange maître (50, 51) d'au moins un pigment ;
b) injection simultanée de la composition polymère thermoplastique (40, 41) et du mélange maître (50, 51) dans un cylindre d'injection (2) communiquant avec ladite trémie (31) et ledit réservoir (32) via un doseur (30) ;
c) plastification de la composition polymère thermoplastique (40, 41) et du mélange maître (50, 51) pour former, dans le cylindre d'injection, une matière plastique fondue (60, 61) ;
d) transfert de la matière plastique fondue (60, 61) dans un moule (7, 71, 72) ; et
e) mise sous pression du moule (7, 71, 72) pour former l'article moulé ; puis
f) mise à une température contrôlée du moule (7, 71, 72) pour rigidifier l'article moulé et l'éjecter ;
ledit procédé étant **caractérisé en ce que** la composition polymère thermoplastique (41) introduite initialement dans la trémie (31) comprend au plus 5% en poids de charges minérales par rapport au poids total de l'article et se présente sous forme d'une résine non compoundée avec une teneur en eau résiduelle d'au plus 0,02% par rapport au poids total de ladite composition,
le taux de charges minérales dans ledit article culinaire étant d'au plus 5%,
et **en ce que** le seul mélange maître (51) contient, outre le ou les pigments, au moins un agent de nucléation.

2. Procédé selon la revendication 1, **caractérisé en ce que** la composition polymère thermoplastique est constituée de granulés de PET non compoundés et est exempte de charges, de pigments et d'additif avec un taux d'humidité inférieur à 0,02%.

3. Procédé selon la revendication 1 ou 2, **caractérisé en ce que** l'agent de nucléation est choisi parmi les agents de nucléation inorganiques, les agents de nucléation organiques, les sels de métaux alcalins et les résines ionomères.

4. Procédé selon la revendication 3, **caractérisé en ce que** l'agent de nucléation est le benzoate de sodium.

5. Procédé selon l'une quelconque des revendications 1 à 4, **caractérisé en ce que** le mélange maître (51) comporte en outre une deuxième résine thermoplastique différente du PET, de manière que le mélange maître (51) soit formé d'une dispersion de l'agent de nucléation et du pigment dans ladite deuxième résine thermoplastique.

6. Procédé selon la revendication 5, **caractérisé en ce que** ladite deuxième résine thermoplastique est une résine choisie parmi les résines polyester, polycarbonate et polyamides.

7. Procédé selon la revendication 6, **caractérisé en ce que** ladite deuxième résine thermoplastique est une résine polyester.

8. Procédé selon la revendication 7, **caractérisé en ce que** ladite résine polyester est le PBT.

9. Article culinaire susceptible d'être obtenu par le procédé de fabrication tel que défini selon l'une quelconque des revendications 1 à 8.

10. Article culinaire selon la revendication 9, caractérisé en qu'il est une spatule, présentant une épaisseur (e) non constante variant entre 0,2 mm et 10 mm, avec au moins deux zones adjacentes (A, B) présentant une différence d'épaisseur d'au moins 10%.

## Patentansprüche

1. Verfahren zur Herstellung eines Kochgegenstands mittels Spritzguss in einer Spritzgießmaschine (1), wobei das Verfahren die folgenden Schritte umfasst:
a) Einbringen einer thermoplastischen Polymerzusammensetzung (40, 41), die Polyethylenterephthalat umfasst, in einen Beschickungstrichter (31) und Einbringen eines Masterbatch (50, 51) mindestens eines Pigments in einen Behälter (32);
b) gleichzeitiges Einspritzen der thermoplastischen Polymerzusammensetzung (40, 41) und des Masterbatch (50, 51) in einen Einspritzzylinder (2), der mit dem Trichter (31) und dem Behälter (32) über eine Dosiervorrichtung (30) kommuniziert;
c) Plastifizieren der thermoplastischen Polymerzusammensetzung (40, 41) und des Masterbatch (50, 51), so dass im Einspritzzylinder ein schmelzflüssiges Kunststoffmaterial (60, 61) gebildet wird;
d) Überführen des schmelzflüssigen Kunststoffmaterials (60, 61) in eine Form (7, 71, 72) und
e) unter-Druck-Setzen der Form (7, 71, 72), um den Formkörper herzustellen; und dann
f) Unterwerfen der Form (7, 71, 72) einer kontrollierten Temperatur, um den Formkörper zu verfestigen und auszuwerfen,
wobei das Verfahren **dadurch gekennzeichnet ist, dass** die thermoplastische Polymerzusammensetzung (41), die zu Beginn in den Trichter (31) eingebracht wird, höchstens 5 Gew.-% mineralische Füllstoffe, bezogen auf das Gesamtgewicht des Gegenstands, enthält und in Form eines nicht-compoundierten Harzes mit einem Restwassergehalt von höchstens 0,02%, bezogen auf das Gesamtgewicht der Zusammensetzung, vorliegt,
wobei der Anteil an mineralischen Füllstoffen in dem Kochgegenstand höchstens 5% beträgt,
und dadurch, dass der einzige Masterbatch (51) außer dem/den Pigment(en) mindestens ein Keimbildungsmittel enthält.

2. Verfahren nach Anspruch 1, **dadurch gekennzeichnet, dass** die thermoplastische Polymerzusammensetzung aus nicht-compoundierten PET-Granulaten besteht und keine Füllstoffe, Pigmente und kein Additiv bei einem Feuchtigkeitsgrad von weniger als 0,02% enthält.

3. Verfahren nach Anspruch 1 oder 2, **dadurch gekennzeichnet, dass** das Keimbildungsmittel aus anorganischen Keimbildungsmitteln, organischen Keimbildungsmitteln, Alkalimetallsalzen und Ionomerharzen ausgewählt ist.

4. Verfahren nach Anspruch 3, **dadurch gekennzeichnet, dass** das Keimbildungsmittel Natriumbenzoat ist.

5. Verfahren nach einem der Ansprüche 1 bis 4, **dadurch gekennzeichnet, dass** der Masterbatch (51) zudem ein zweites, von PET verschiedenes thermoplastisches Harz enthält, so dass der Masterbatch (51) durch eine Dispersion des Keimbildungsmittels und des Pigments in dem zweiten thermoplastischen Harz gebildet wird.

6. Verfahren nach Anspruch 5, **dadurch gekennzeichnet, dass** das zweite thermoplastische Harz ein aus Polyester-, Polycarbonat- und Polyamidharzen ausgewähltes Harz ist.

7. Verfahren nach Anspruch 6, **dadurch gekennzeichnet, dass** das zweite thermoplastische Harz ein Polyesterharz ist.

8. Verfahren nach Anspruch 7, **dadurch gekennzeichnet, dass** das Polyesterharz PBT ist.

9. Kochgegenstand, der durch das Herstellungsverfahren nach einem der Ansprüche 1 bis 8 erhältlich ist.

10. Kochgegenstand nach Anspruch 9, **dadurch gekennzeichnet, dass** es sich um einen Spatel mit einer nicht-konstanten Dicke (D), die zwischen 0,2 mm und 10 mm variiert, handelt, wobei mindestens zwei benachbarte Zonen (A, B) einen Dickenunterschied von mindestens 10% aufweisen.

## Claims

1. Process for manufacturing a cooking utensil by injection moulding in an injection press (1), said process comprising the following steps:
a) introducing into a feed hopper (31) a thermoplastic polymer composition (40, 41) comprising polyethylene terephthalate, and introducing into a reservoir (32) a masterbatch (50, 51) of at least one pigment;
b) simultaneously injecting the thermoplastic polymer composition (40, 41) and the masterbatch (50, 51) into an injection cylinder (2) that communicates with said hopper (31) and said reservoir (32) via a metering device (30);
c) plasticizing the thermoplastic polymer composition (40, 41) and the masterbatch (50, 51) in order to form, in the injection cylinder, a molten plastic material (60, 61);
d) transferring the molten plastic material (60, 61) into a mould (7, 71, 72); and
e) pressurizing the mould (7, 71, 72) in order to form the moulded article; then
f) setting the mould (7, 71, 72) at a controlled temperature in order to stiffen the moulded article and eject it;
said process being **characterized in that** the thermoplastic polymer composition (41) introduced initially into the hopper (31) comprises at most 5% by weight of mineral fillers relative to the total weight of the article and is in the form of an uncompounded resin with a residual water content of at most 0.02% relative to the total weight of said composition,
the content of mineral fillers in said cooking utensil being at most 5%,
and **in that** the sole masterbatch (51) contains, in addition to the pigment(s), at least one nucleating agent.

2. Process according to Claim 1, **characterized in that** the thermoplastic polymer composition consists of uncompounded PET granules and is free of fillers, pigments and additive with a moisture content of less than 0.02%.

3. Process according to Claim 1 or 2, **characterized in that** the nucleating agent is chosen from inorganic nucleating agents, organic nucleating agents, alkali metal salts and ionomer resins.

4. Process according to Claim 3, **characterized in that** the nucleating agent is sodium benzoate.

5. Process according to any one of Claims 1 to 4, **characterized in that** the masterbatch (51) additionally comprises a second thermoplastic resin different from PET, so that the masterbatch (51) is formed from a dispersion of the nucleating agent and of the pigment in said second thermoplastic resin.

6. Process according to Claim 5, **characterized in that** said second thermoplastic resin is a resin chosen from polyester, polycarbonate and polyamide resins.

7. Process according to Claim 6, **characterized in that** said second thermoplastic resin is a polyester resin.

8. Process according to Claim 7, **characterized in that** said polyester resin is PBT.

9. Cooking utensil capable of being obtained by the manufacturing process as defined according to any one of Claims 1 to 8.

10. Cooking utensil according to Claim 9, **characterized in that** it is a spatula, having a non-constant thickness (e) that varies between 0.2 mm and 10 mm, with at least two adjacent zones (A, B) having a difference in thickness of at least 10%.
